Europäisches Patentamt

**European Patent Office**

Office européen des brevets

(19)

(11) Publication number: **0 408 102 A1**

## EUROPEAN PATENT APPLICATION

(12)

(21) Application number: 90201716.9

(22) Date of filing: **28.06.90**

(51) Int. Cl.⁵: **A01K 1/015**

(30) Priority: **14.07.89 NL 8901819**

(43) Date of publication of application:
**16.01.91 Bulletin 91/03**

(84) Designated Contracting States:
**AT BE CH DE DK ES FR GB GR IT LI LU NL SE**

(71) Applicant: **Verbakel, Lambertus Adrianus Antonius**
**Industrieweg 13**
**NL-5492 NG St. Oedenrode(NL)**

(72) Inventor: **Verbakel, Lambertus Adrianus Antonius**
**Industrieweg 13**
**NL-5492 NG St. Oedenrode(NL)**

(74) Representative: **Van kan, Johan Joseph Hubert, Ir. et al**
**Algemeen Octrooibureau P.O. Box 645**
**Boschdijk 155**
**NL-5600 AP Eindhoven(NL)**

(54) **A stable and material to be used therein as a floor-forming means.**

(57) A stable for keeping animals, said stable consisting of a floor with fencing provided thereon, characterized in that said floor is formed by a finely divided material consisting of a carrier for microbes provided thereon, said microbes being able to decompose droppings produced by the animal, said material forming a layer which is at least 30 cm high, and the material as used consisting of microbes, provided on the carrier.

EP 0 408 102 A1

# A STABLE AND MATERIAL TO BE USED THEREIN AS A FLOOR-FORMING MEANS.

The invention relates to a stable for keeping animals, said stable consisting of a floor with fencing provided thereon. The invention furthermore relates to a material to be used as a floor-forming means in a stable for keeping animals, in particular for keeping pigs, said material consisting of a carrier for microbes which are able to decompose the droppings produced by the animal, which carrier is provided with such microbes.

In factory farming, in particular for keeping and breeding pigs, there are two main problems. The first problem is connected with the production of considerable quantities of liquid manure and the related emission of ammonia, and the second problem is that certain sections from our society, who think that keeping animals separated from one another on a relatively small area is not a humane way of treating animals, raise objections to keeping animals in a semi-industrial manner. Compared with prior stables, which had a concrete floor, a great deal of improvements have been developed, which eventually have led to metal grid floors over pits in which the droppings are collected and discharged. Such a floor construction is known from US-A-4,294,195. Besides the fact that such floor constructions are costly and that the animals are kept in relatively small pens, the problem of the liquid manure and the emission of ammonia remains. Now a solution has been found for the existing problems, whereby an inexpensive floor construction has been found, the stable is more pleasant for the animals and the problem of the liquid manure and the emission of ammonia is greatly reduced. The stable according to the invention for keeping animals, as mentioned in the preamble, which consists of a floor with fencing provided thereon, is characterized in that said floor is formed by a finely divided material consisting of a carrier for microbes provided thereon, said microbes being able to decompose droppings produced by the animal, said material forming a layer which is at least 30 cm high. Said carrier preferably consists of sawdust forming the floor in a layer thickness of 30 - 200 cm. Thus an entirely new approach has been found for building a stable and a breakthrough has been achieved compared with the floor constructions consisting of metal grids used up to now.

From German Offenlegungsschrift 2558257 it is known that a material is strewn across a stable floor, which material consists of a carrier with bacteria provided thereon, said bacteria taking care of decomposition of the droppings. Such carriers with microbes are also known from European Patent Application 0,099,052 and French Patent 62,165, which do not indicate that such materials can be used as a floor material in stables, however. From Dutch Patent Application 7605620 there is known a litter for stables whereby straw, which was usually spread across a floor, is replaced by sawdust provided with a fragrant oil. Such a sawdust, provided with oil, is used instead of straw in stables for horses, because there are certain drawbacks connected with the use of straw in horse stables, in particular the bulkiness of straw and the fact that straw decays fast. Furthermore it was also known to keep pigs on straw, according to the principle of the so-called loose yard, but in such stables, such as used in former days, fresh straw was constantly supplied and the floor area had risen about 1 m after one year. This was caused in particular because the droppings were not decomposed and new straw material was constantly supplied. With the present embodiment it is not necessary to supply fresh carrier and the droppings and/or the liquid manure are decomposed, so that the level of the floor surface remains constant. The advantage of the stable according to the invention, of which the bottom part is formed from the present material, is that the animals find such a floor to be more pleasant because they can work this material as they would the soil in free nature. As a result of their more natural behaviour the animals are less agressive, which makes it possible to construct larger pens and to put more animals together on larger floor areas, so that each animal has more room to move around. Preferably the material is formed from sawdust as the carrier with the microbes divided thereover, said microbes being micro-organisms of both vegetable and animal origin, said bacteria being able to convert the droppings and/or the liquid manure into harmless substances, and in particular to convert ammonia. Once a week the person keeping the animals will dig the droppings which are concentrated in a certain corner of the pen under the material forming the floor surface. Tests have shown that no bad smell or ammonia scent is discerned in a stable having a construction according to the invention.

With existing stable constructions it is possible to remove the grid floors and to fill the pits with the material according to the invention and to keep animals on the pits filled with said material.

An additional advantage is that with such a floor construction sufficient heat is developed by the activity of the organisms which decompose the manure components, so that it is no longer necessary to heat the stable. When the outside temperature is lower than a temperature which the animals find pleasant, they will scrape or push the uppermost layer off the material, so that a slightly warmer layer becomes available, since the microbes are most active in converting the substances to be decomposed in the layer up to a few centimetres beneath the surface. Thus the temperature at that location will be higher than at the surface. When the floor-forming material is mechanically worked once a week, a replenishment of the microbes will be effected at the same time, whereby said microbes, in the shape of an aqueous mixture, are sprayed on the floor-forming material which is already present. It has become apparent that a preparation containing microbes, Nissan SEF, marketed by Kansai Nissan Chemical Ltd. can be used succesfully as the microbes. In the lowermost part of the floor-forming layer the anaerobic bacteria will be active and in the uppermost part of said layer the aerobic bacteria will be active.

The carrier is a natural material which at a later stage, after having been removed from the stable, can be used as a fertilizer or as a supplementary material in greenhouses, as potting soil or compost.

Care must be taken, however, that the microbes have an optimum climate in order to be able to decompose the manure components, and such an optimum climate is mainly determined by the moisture content of the carrier, said moisture content is 50 - 80%. The advantage of this is that undried sawdust can be started from, which is available in large quantities. Said moisture content can further be raised by the way in which the microbes are provided, which may be done by spraying an aqueous mixture of the organism on the carrier. When the animals are fed it should be avoided that constantly wet spots are formed locally in the material forming the floor surface, because in that case the operation of the microbes is affected. This occurrence of wet spots, in particular caused by watering places, can be prevented with certain feeding systems, especially by using feeding troughs in which the feed is present in the form of a mash.

Bacteria, in particular aerobic or anaerobic bacteria, can be provided on the carrier, as well as enzymes, dependent on the composition of the droppings and dependent on the desired final product. After about 18 months 20 cm of the uppermost layer of the surface is renewed by fresh carrier with the microbes scattered around therein. The carrier has a particle size which is preferably smaller than 3 mm, in particular when anaerobic bacteria are used, so that in that case a substantially airtight sealing of the underlayer is achieved.

Tests have shown that the pigs raised in this manner produce a more tender and more desirable quality of meat, and that the animals do not show any agressive behaviour, which can be demonstrated because it is no longer necessary to dock the tail, since the animals do not show any form of cannibalism.

A further advantage of said stable construction according to the invention is that when the known stables having a grid floor are reconstructed it is not necessary to remove the final remnants of liquid manure from the pit, because a layer of a few centimetres may stay behind in the pit, which layer will then serve as a nutritive material for the first layer of carrier with microbes. Said microbes can be stimulated into conversion through the entire layer, and the remnant of liquid manure can serve as a nutritive material for the microbes provided on the carrier. When, dependent on the seasonal influences, the depth of the bed and the degree of conversion or fermentation, the temperature runs up to 35 - 40 $^\circ$ C it is necessary to check the temperature of the bed and, when the temperature is too high, to cool down the bed by sprinkling water on it, which is also necessary in that case in order to maintain the desired moisture content, or by ventilating the stable.

Besides the fact that the environment is pleasant for the animals an important advantage of the stable construction which is now proposed is that the liquid manure produced by the animals is processed on the spot, and it is no longer necessary to transport it to factories where the liquid manure is processed into a possibly dischargeable product by fermentation and evaporation.

## Claims

1. A stable for keeping animals, said stable consisting of a floor with fencing provided thereon, characterized in that said floor is formed by a finely divided material consisting of a carrier for microbes provided thereon, said microbes being able to decompose droppings produced by the animal, said material forming a layer which is at least 30 cm high.

2. A stable according to claim 1, characterized in that said carrier is a natural material, which at a later stage of use is compatible with the soil.

3. A stable according to claims 1 - 2, characterized in that said carrier consists of sawdust.

4. A stable according to claims 1 - 3, characterized in that the layer thickness is 30 - 200 cm.

5. A stable according to claims 1 - 4, characterized in that said material is suitable as a filling material for existing pits from which the grids have been removed.

6. A stable according to claims 1 - 5, characterized in that during use the moisture content of said material is maintained at 50 -80% and that the temperature is kept below 40 °C.

7. A material to be used as a floor-forming means in a stable for keeping animals, in particular for keeping pigs, said material consisting of a carrier for microbes which are able to decompose the droppings produced by the animal, which carrier is provided with such microbes, characterized in that said carrier consists of sawdust or a wood product which is comparable therewith, and that said microbes are a bacteria-containing SEF-product (produced and marketed by Kansai Nissan Chemical Ltd. Tokyo).

8. A material according to claim 7, characterized in that said microbes are anaerobic bacteria and aerobic bacteria.

9. A material according to claim 7, characterized in that said microbes are enzymes.

10. A method for preparing a material according to claim 7, characterized in that said microbes are sprayed on the carrier in the form of an aqueous mixture.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | DE-A-2 558 257 (F.X. KNEER)<br>* Whole document * | 1-3,6,8 | A 01 K 1/015 |
| D,Y | NL-A-7 605 620 (S.A. DES ETS. FALIENOR)<br>* Claims * | 1-3,6,8 | |
| D,Y | FR-E- 62 165 (COMPAGNIE FRANCAISE DU FUMIER NATUREL)<br>* Whole document * | 1 | |
| D,Y | EP-A-0 099 052 (SÜD-CHEMIE AG)<br>* Claims * | 1,8 | |

TECHNICAL FIELDS
SEARCHED (Int. Cl.5)

A 01 K

The present search report has been drawn up for all claims

| Place of search | Date of completion of the search | Examiner |
|---|---|---|
| THE HAGUE | 21-09-1990 | GOLLER P. |